# EUROPÄISCHE PATENTSCHRIFT

(11) **EP 0 997 349 B1**
(45) Veröffentlichungstag und Bekanntmachung des Hinweises auf die Patenterteilung: **27.03.2002**
(21) Anmeldenummer: 99119187.5
(22) Anmeldetag: 07.10.1999
(51) Int. Cl.: B60R 21/01

(54) **Vorrichtung zum Auslösen eines Insassenschutzmittels eines Kraftfahrzeugs**
Apparatus for firing the squib of a passenger protection device in a vehicle
Dispositif de mise à feu du détonateur d'un système de retenue d'un véhicule

(30) Priorität: 27.10.1998 DE 19849535
(43) Veröffentlichungstag der Anmeldung: 03.05.2000
(73) Patentinhaber: SIEMENS AKTIENGESELLSCHAFT, 80333 München (DE)
(72) Erfinder: Grasshoff, Helge, 93049 Regensburg (DE); Föll, Albrecht, 71563 Affalterbach (DE)

(56) Entgegenhaltungen:
- EP-A- 0 594 234
- EP-A- 0 794 094
- DE-C- 19 638 457
- US-A- 5 657 831

## Beschreibung

Die Erfindung betrifft eine Vorrichtung zum Auslösen eines Insassenschutzmittels eines Kraftfahrzeugs.

Bei Insassenschutzsystemen, die in Fahrzeugen zur Personenbeförderung eingesetzt werden, wie z.B. Airbag-Systeme oder Gurtstraffer, werden hohe Anforderungen an die Zuverlässigkeit gestellt.

Airbag-Systeme weisen üblicherweise für jeden Airbag einen Zündkreis mit einem den Airbag betätigenden Zündelement, der sogenannten Zündpille, auf, die in Reihe zwischen zwei steuerbaren Schaltern liegt. Ein mit Beschleunigungssensoren zusammenwirkendes Steuergerät aktiviert im Falle eines gefährlichen Aufpralls das Zündelement, indem es die im Zündkreis befindlichen steuerbaren Schalter mit einem Auslösesignal schließt. Um eine Fehlauslösung des Airbags in Folge eines Fehlers im Steuergerät oder in den Beschleunigungssensoren zu verhindern, ist es bekannt, einen mechanischen Sicherheitsschalter, in Form eines elektromechanischen Beschleunigungsschalters, in Reihe zum Zündelement vorzusehen, der bei ausreichender Beschleunigung schließt und dadurch den Zündstromweg freigibt, also einen Stromfluß durch das Zündelement ermöglicht.

Da derartige elektromechanische Beschleunigungsschalter zum Prellen neigen, besteht die Gefahr, daß der Zündstrom durch das Zündelement nicht ausreichend lange fließt, um das Insassenschutzmittel sicher zu aktivieren. Aus der älteren Anmeldung WO 99/67110 ist eine Vorrichtung zum Auslösen eines Insassenschutzmittels bekannt, bei der die Schließdauer der übrigen Schalter im Zündkreis durch ein Zeitglied derart verlängert wird, daß auch bei Prellen des Beschleunigungsschalters ein sicheres Zünden des Zündelements gewährleistet ist.

Da eine derartige Verlängerung der Schließdauer stets auf den ungünstigsten Fall ausgelegt sein muß, kommt es häufig über längere Zeit zu einem hohen Stromfluß - üblicherweise mindestens 1,75 Ampere - durch den Zündkreis. Das führt schließlich dazu, daß die steuerbaren Schalter, die häufig als Transistoren ausgebildet sind oder in einem anwenderspezifisch integrierten Schaltkreis (ASIC) integriert sind, zerstört werden. Außerdem werden die Energiespeicher vollkommen entleert.

In modernen Fahrzeugen werden immer häufiger mehrstufige Airbag-Systeme eingesetzt, d.h. der Airbag kann abhängig von Umgebungsbedingungen, wie z.B. Insassenposition, Temperatur oder Schwere des Aufpralls, in mehreren Stufen aufgeblasen werden. Hierzu ist es nötig, daß die Auslösevorrichtung auch nach erfolgter Zündung funktionsfähig bleibt, d.h. bei einer Zündung des Zündelements dürfen weder Bauteile zerstört noch der Energiespeicher völlig entleert werden.

Der Erfindung liegt das Problem zugrunde, eine Vorrichtung zu schaffen, die ein sicheres Zünden des Zündelements und damit ein sicheres Auslösen eines Insassenschutzmittels gewährleistet, ohne dabei die Funktionsfähigkeit der Auslösevorrichtung zu beeinträchtigen.

Das Problem wird erfindungsgemäß durch eine Vorrichtung mit den Merkmalen des Patentanspruchs 1 gelöst. Vorteilhafte Weiterbildungen der Erfindung sind in den Unteransprüchen niedergelegt.

Mit einer Stromflußmeßeinheit, einer Logikeinheit und einer Auswerteschaltung wird der Stromfluß durch den Zündkreis und damit indirekt das Schließverhalten des Beschleunigungsschalters überwacht. Abhängig vom Schließverhalten des Beschleunigungsschalters werden die übrigen Schalter im Zündkreis derart gesteuert, daß sie so lange leitend geschaltet bleiben, bis der Zündstrom für eine vorgegebene Mindestzeitdauer geflossen ist und damit ein sicheres Zünden des Zündelements gewährleistet ist. Auf diese Weise wird die Dauer des Stromflusses durch den Zündkreis minimiert und es kommt zu keiner Zerstörung von Bauteilen und zu keiner völligen Entleerung der Energiespeicher. Somit können anschließend weitere Zündstufen mit derselben Auslösevorrichtung gezündet werden.

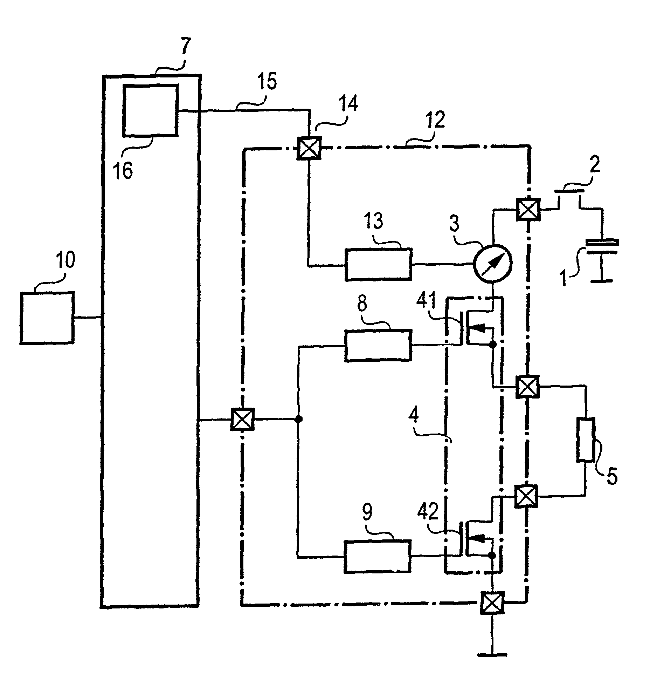

Ein Ausführungsbeispiel der Erfindung wird im folgenden anhand der Zeichnung erläutert. Die einzige Figur zeigt ein Blockschaltbild der erfindungsgemäßen Vorrichtung.

Ein Energiespeicher 1 ist in Serie angeordnet zu einem elektromechanischen Beschleunigungsschalter 2, einer Stromflußmeßeinheit 3, einer ersten elektrisch steuerbaren Endstufe 41, einem Zündelement 5 des Insassenschutzmittels und einer zweiten elektrisch steuerbaren Endstufe 42. Zum Beaufschlagen des Zündelements 2 mit Strom aus dem Energiespeicher 1 ist einerseits ein gesteuertes Leitendschalten des die elektrisch steuerbaren Endstufen 41 und 42 enthaltenden Schaltmittels 4 durch eine Steuerschaltung 7 erforderlich, die vorzugsweise als Mikroprozessor ausgebildet ist, und andererseits ein gleichzeitiges Schließen von Kontakten des Beschleunigungsschalters 2. Es ist ebenso möglich, die Schaltung derart auszubilden, daß das Zündelement 5 mit Energie beaufschlagt wird, wenn die Kontakte des Beschleunigungsschalters 2 öffnen oder wenn das Schaltmittel 4 sperrend geschaltet wird.

Die steuerbaren Endstufen 41 und 42, die beispielsweise als Feldeffekttransistoren ausgebildet sind, werden über Treiber 8 und 9 gesteuert und durch Auslösesignale der Steuerschaltung 7 leitend geschaltet. Dabei erzeugt die Steuerschaltung 7 die Auslösesignale, wenn die Auswertung eines von einem Beschleunigungssensor 10 gelieferten Beschleunigungssignals einen zum Auslösen des Insassenschutzmittels ausreichend starken Aufprall erkannt hat. Damit eine Auslöseentscheidung nicht alleine von der Funktionstüchtigkeit eines einzigen Sensors und einer einzigen Steuerschaltung abhängt, weisen Insassenschutzvorrichtungen gewöhnlich einen elektromechanischen Beschleunigungsschalter mit einer beweglichen trägen Masse auf, die bei Einwirkung einer Mindestbeschleunigung einen elektrischen Kontakt schließt und damit einen Stromfluß im Zündkreis, bestehend aus den Komponenten 1, 2, 3, 4, 5, ermöglicht.

Anstelle der als Transistor ausgebildeten steuerbaren Endstufen 41 und 42 kann jeder andere elektrisch steuerbare Schalter mit ausreichender Stromtragfähigkeit verwendet werden. Auch kann das Schaltmittel 4 in einem Zündkreis einer Insassenschutzmittelvorrichtung nur eine einzige steuerbare Endstufe aufweisen.

Um ein sicheres Zünden des Insassenschutzmittels zu gewährleisten muß das Zündelement 5 für eine vorgegebene Mindestzeitdauer, z.B. 2 ms, mit einem Zündstrom beaufschlagt werden, d.h. die steuerbaren Endstufen 41 und 42 müssen für diese Mindestzeitdauer gemeinsam mit dem Beschleunigungsschalter 2 leitend geschaltet bzw. geschlossen sein. Da aber derartige elektromechanische Beschleunigungsschalter 2 zum Prellen neigen, besteht die Gefahr, daß der Zündstrom nicht ausreichend lange fließt. Über eine Stromflußmeßeinheit 3, die vorzugsweise zwischen den Beschleunigungsschalter 2 und die erste steuerbare Endstufe 41 geschaltet ist, besteht die Möglichkeit, den Stromfluß durch das Zündelement 5 und somit indirekt das Schließverhalten des Beschleunigungsschalters 2 zu überwachen. Die Endstufen 41 und 42 können dann in Abhängigkeit vom Schließverhalten des Beschleunigungsschalters 2 derart gesteuert werden, daß das Zündelement 5 exakt für die vorgegebene Mindestzeitdauer mit Zündstrom beaufschlagt wird, so daß ein sicheres Zünden gewährleistet ist, ohne die Endstufen 41, 42 und den Energiespeicher 1 mehr als notwendig zu belasten.

Vorteilhaft sind die steuerbaren Endstufen 41 und 42 mit den zugehörigen Treibern 8 und 9 sowie die Stromflußmeßeinheit 3 in einen anwendungsspezifisch integrierten Schaltkreis (ASIC) 12 integriert, der in der Figur durch eine gestrichelte Linie angedeutet ist. Eine vorteilhaft ebenfalls in den ASIC 12 integrierte Logikeinheit 13 setzt den von der Stromflußmeßeinheit 3 gemessenen Wert des Zündstroms in ein Logiksignal um. Diese Umsetzung kann beispielsweise so realisiert sein, daß am Ausgang der Stromflußmeßeinheit 3 bei einem Stromfluß, der über einer vorgegebenen Schwelle, z.B. 1,75 A, liegt, ein logisches High-Signal und ansonsten ein Low-Signal ausgegeben wird. Dieses Logiksignal kann an einem Digitalausgang 14 des ASIC 12 abgegriffen werden und über eine Leitung 15 an eine, vorzugsweise in die Steuerschaltung 7 integrierte Auswerteschaltung 16 übermittelt werden. Sobald der Zündstrom durch den Zündkreis für die erforderliche Mindestzeitdauer geflossen ist, wird von der Auswerteschaltung 16, die im einfachsten Fall eine einfache Zählfunktion ausführt, ein OK-Signal an die Steuerschaltung 7 übermittelt. Die Steuerschaltung 7 kann somit die steuerbaren Endstufen 41 und 42 über die Treiber 8 und 9 derart steuern, daß sie so lange leitend geschaltet bleiben, bis ein OK-Signal von der Auswerteschaltung 16 eintrifft, also das Zündelement 5 für exakt die vorgegebene Mindestzeitdauer mit Zündstrom beaufschlagt wird.

Alternativ hierzu kann die Auswerteschaltung 16 auch außerhalb der Steuerschaltung 7 als digitaler Zähler realisiert werden, der bei geschlossenem Beschleunigungsschalter 2 ein Taktsignal mit fester Taktfrequenz summiert und bei Erreichen eines vorgegebenen Schwellwerts, der der Mindestzeitdauer entspricht, ein OK-Signal an die Steuerschaltung 7 übermittelt. Öffnet der Beschleunigungsschalter 2 vor Erreichen der Mindestzeitdauer, so wird der Zähler zurückgesetzt.

Möglich ist auch, die Auswerteschaltung (16) als analogen Integrator auszubilden, der bei Anliegen eines entsprechenden Signalpegels festgelegte Spannungswerte aufintegriert und bei Erreichen einer vorgegebenen Schwellspannung beispielsweise mit Hilfe eines analogen Vergleichers ein OK-Signal an die Steuerschaltung (7) übermittelt.

Die Überwachung des Schließverhaltens des Beschleunigungsschalters 2 bietet den Vorteil, daß der Stromfluß durch den Zündkreis zeitlich minimiert wird, so daß Energie gespart wird und die Bauelemente der Auslösevorrichtung geschont werden. Auf diese Weise bleibt die Auslösevorrichtung auch nach erfolgtem Zünden funktionsfähig und kann zur Zündung weiterer Zündstufen verwendet werden.

## Patentansprüche

1. Vorrichtung zum Auslösen eines Insassenschutzmittels eines Kraftfahrzeugs, die aufweist:
- einen Energiespeicher (1), ein Zündelement (5) für das Insassenschutzmittel und ein elektrisch steuerbares Schaltmittel (4) zum Übertragen von Energie aus dem Energiespeicher (1) auf das Zündelement (5) bei Betätigung des Schaltmittels (4),
- eine Steuerschaltung (7) zum Steuern des Schaltmittels (4),
- einen elektromechanischen Beschleunigungsschalter (2), durch den beim Auftreten einer ausreichenden Beschleunigung der Zündstromweg freigegeben wird,
**dadurch gekennzeichnet, daß** der elektromechanische Beschleunigungsschalter (2) geeignet ist, den Zündstromweg zu unterbrechen und daß eine Stromflußmeßeinheit (3) vorgesehen ist, durch die der im Zündkreis fließende Strom gemessen wird,
wobei das Schaltmittel (4) abhängig vom gemessenen Strom derart gesteuert wird, daß das Zündelement (5) für eine vorgegebene Mindestzeitdauer mit Zündstrom beaufschlagt wird.

2. Vorrichtung nach Anspruch 1, **gekennzeichnet durch**
- eine Logikeinheit (13), **durch** die der von der Strommeßeinrichtung ( 3) gemessene Stromwert in ein Logiksignal umgesetzt wird, und
- eine Auswerteschaltung (16) **durch** die aufgrund des Logiksignals die Zeitdauer des Zündstromflusses überwacht wird und bei Erreichen der Mindestzeitdauer ein OK-Signal an die Steuerschaltung (7) übermittelt wird.

3. Vorrichtung nach Anspruch 2, **dadurch gekennzeichnet, daß** die Auswerteschaltung (16) in die Steuerschaltung (7) integriert ist.

4. Vorrichtung nach Anspruch 2, **dadurch gekennzeichnet, daß** die Auswerteschaltung (16) als digitaler Zähler ausgebildet ist.

5. Vorrichtung nach Anspruch 2, **dadurch gekennzeichnet, daß** die Auswerteschaltung (16) als analoger Integrator ausgebildet ist.

6. Vorrichtung nach einem der vorhergehenden Ansprüche, **dadurch gekennzeichnet, daß** die Stromflußmeßeinheit (3) und die Logikeinheit (13) gemeinsam mit dem elektrisch steuerbaren Schaltmittel (4) in einen anwenderspezifisch integrierten Schaltkreis (12) integriert sind.

## Claims

1. Device for activation of an occupant protective device of a vehicle, that has
- an energy storage device (1), a detonating element (5) for the occupant protection device and an electrically-controllable switch device (4) for transmission of the power from the energy storage device (1) to the detonating element (5) when the switch device (4) is actuated,
- a control circuit (7) for control of the switch device (4),
- an electromechanical acceleration switch (2) that releases the detonation current path when an adequate acceleration occurs,
**characterised in that** the electromechanical acceleration switch (2) is suitable for interruption of the detonation current path and that
a current flow measuring device (3) is provided, by means of which the current flowing in the detonation circuit is measured, with the switch device (4) being controlled relative to the measured current such that detonating current is applied to the detonation element (5) for a preset minimum duration.

2. Device according to Claim 1, **characterised by**
- a logic unit (13), by means of which the current measured by the current measuring device (3) is converted to a logic signal, and
- an evaluation circuit (16), by means of which the duration of the detonating current flow is monitored on the basis of the logic signal and an OK signal is transmitted to the control circuit (7) when the minimum duration is reached.

3. Device according to Claim 2, **characterised in that** the evaluation circuit (16) is integrated into the control circuit (7).

4. Device according to Claim 2, **characterised in that** the evaluation circuit (16) is designed as a digital counter.

5. Device according to Claim 2, **characterised in that** the evaluation circuit (16) is designed as an analogue integrator.

6. Device according to one of the preceding claims, **characterised in that** the current flow measuring unit (3) and the logic unit (13) are integrated together with the electrically-controllable switch unit (4) into a application-oriented integrated circuit (12).

## Revendications

1. Dispositif pour le déclenchement d'un moyen de protection des occupants dans un véhicule automobile, qui comprend :
- un accumulateur d'énergie (1), un élément d'allumage (5) pour le moyen de protection des occupants et un dispositif de commutation (4) pouvant être commandé électriquement, destiné à transmettre l'énergie de l'accumulateur d'énergie (1) à l'élément d'allumage (5) lors de l'actionnement du dispositif de commutation (4),
- un circuit de commande (7) destiné à commander le dispositif de commutation (4),
- un interrupteur d'accélération électromécanique (2) qui libère le trajet du courant d'allumage en réponse à l'apparition d'une accélération suffisante,
**caractérisé en ce que** l'interrupteur d'accélération électromécanique (2) est approprié pour interrompre le trajet du courant d'allumage et **en ce qu'**il est prévu une unité (3) de mesure du passage du courant qui mesure le courant qui passe dans le circuit d'allumage, cependant que le dispositif de commutation (4) est commandé en fonction du courant mesuré de telle manière que l'élément d'allumage (5) soit alimenté en courant d'allumage pendant une durée minimale prédéterminée.

2. Dispositif selon la revendication 1, **caractérisé par**
- une unité logique (13) par laquelle la valeur de courant mesurée par le dispositif (3) de mesure du courant est convertie en un signal logique, et
- un circuit d'analyse (16) par lequel la durée du passage du courant d'allumage est surveillée sur la base du signal logique et un signal OK est transmis au circuit de commande (7) lorsqu'on a atteint la durée minimale,.

3. Dispositif selon la revendication 2, **caractérisé en ce que** le circuit d'analyse (16) est intégré dans le circuit de commande (7).

4. Dispositif selon la revendication 2, **caractérisé en ce que** le circuit d'analyse (16) est constitué par un compteur numérique.

5. Dispositif selon la revendication 2, **caractérisé en ce que** le circuit d'analyse (16) est constitué par un intégrateur analogique.

6. Dispositif selon une des revendications précédentes, **caractérisé en ce que** l'unité (3) de mesure du passage du courant et l'unité logique (13) sont intégrées, avec le dispositif de commutation (4) pouvant être commandé électriquement, dans un circuit de commande intégré spécifique à l'utilisation (12).
